Europäisches Patentamt

European Patent Office

Office européen des brevets

(11) Publication number: **0 470 936 B1**

## EUROPEAN PATENT SPECIFICATION

(45) Date of publication of patent specification: **07.12.94**   (51) Int. Cl.⁵: **C01B 6/34**, C01B 25/06, C01B 33/04, C01C 1/12

(21) Application number: **91830306.6**

(22) Date of filing: **10.07.91**

(54) **Removal of impurities from a hydride gas.**

(30) Priority: **12.07.90 IT 2092490**

(43) Date of publication of application:
**12.02.92 Bulletin 92/07**

(45) Publication of the grant of the patent:
**07.12.94 Bulletin 94/49**

(84) Designated Contracting States:
**DE FR GB NL**

(56) References cited:
**EP-A- 0 361 386**
**GB-A- 2 177 079**
**GB-A- 2 177 080**
**US-A- 4 565 677**
**US-A- 4 586 561**

**WORLD PATENTS INDEX LATEST, ACCESSION NO. 83-744499, WEEK 34, DERWENT PUBLICATIONS LTD., &JP-A-58120511**

(73) Proprietor: **SAES GETTERS S.p.A.**
**Via Gallarate, 215/217**
**I-20123 Milano (IT)**

(72) Inventor: **Succi, Marco**
**Via Lo Monaco, 9**
**I-Milano (IT)**
Inventor: **Boffito, Claudio**
**Via Papa Giovanni XXIII, 2/14**
**I-RHO (Milano) (IT)**
Inventor: **Solcia, Carolina**
**Via Lazio, 7**
**I-Grezzano (Milano) (IT)**

(74) Representative: **Adorno, Silvano et al**
**c/o SOCIETA' ITALIANA BREVETTI S.p.A.**
**Via Carducci, 8**
**I-20123 Milano (IT)**

**Description**

The present invention relates to a method or process for the removal impurities from a hydride gas and in particular to the removal of disiloxane from silane.

Hydride gases are extensively used in the semiconductor industry for such processes as chemical vapour deposition (CVD) and epitaxy. These hydride gases are $SiH_4$ (silane), $GeH_4$ (germane), $NH_3$ - (ammonia), $AsH_3$ (arsine), $SbH_3$ (stibine) and $PH_3$ (phosphine).

Gas purity is of great concern to semiconductor manufacturers and harmful impurities such as $H_2O$ (moisture) and other gases must be kept as low as possible.

In particular, if the hydride gas being used is silane then the impurity content of $(SiH_3)_2O$, (disiloxane), must be kept as low as possible and preferably below the ppm (parts per million) level.

It is common practice to use getter metals, usually in the form of alloys, to remove impurity gases from semiconductor process gases. See for example United Kingdom Patents No. 2,177,079 and No. 2,177,080. However it has been found that such getter metals are not able to be used in the efficient removal of certain unwanted impurity gases such as disiloxane from hydride gases.

If the temperature of the getter metal is sufficiently high to remove some of the impurity gases then decomposition of the hydride gas takes place. If the temperature of the getter metal is sufficiently low to ensure that no decomposition of the hydride gas takes place then some impurity gases are not removed. From the abstract of JP-A-58120511 5 (World Patent Index Latest, 83-744499) it is known a process for refining silane by contact with $H_2$ storing metal material (Ti-Mn-Ti-Zr-Mn, Zr-Mn alloys) which may be activated by hydrogenation.

US-A-4,565,677 discloses a method for purifying a hydride gas according to which said gas is firstly decomposed to form a hydrogenated amorphous layer or film on a high surface area carrier (powder of silicon, alumina and the like, or molecular sieves). In addition to having a lower capacity (and consequently a shorter life) of the purifier, since the carrier occupies the most portion of the available volume, the working temperatures are too high: 200-250°C, thus giving rise to a greater decomposition of the gaseous hydride to be purified. Furthermore only removal of $O_2$ is disclosed, not of other impurities.

It is therefore an object of the present invention to provide a process for the removal of impurities from an impurity containing hydride gas free from one or more of the disadvantages of prior processes.

It is another object of the present invention to provide a process for the removal of impurities from an impurity containing hydride gas without causing decomposition of the hydride gas.

Another object is to provide an improved process for removing impurities, in particular disiloxane, from a stream of silane gas contaminated therewith.

The process according to the present invention is defined by the features in the characterizing portion of claim 1.

These and other objects and advantages of the present invention will become apparent to those skilled in the art by reference to the following description and drawing wherein:

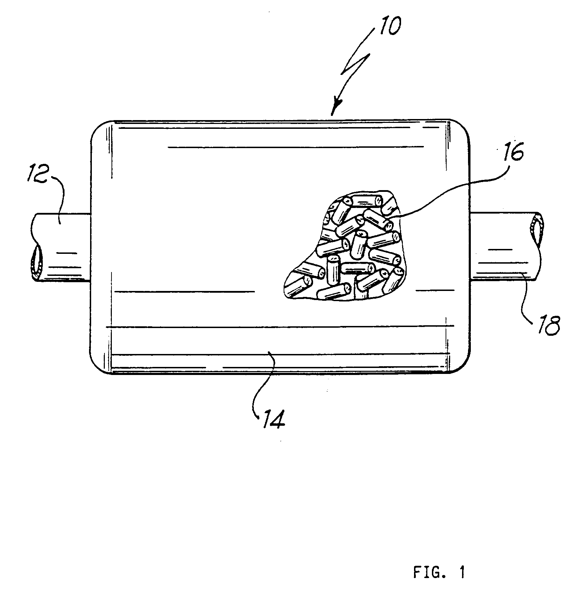

Fig. 1 is a schematic partially cutaway drawing of an apparatus useful in the practice of the present invention.

The invention proceeds along the lines of providing a process for the removal of impurities from an impurity containing hydride gas comprising the steps of passing the impurity containing hydride gas through an impurity containing gas inlet which is in fluid communication with a gas purification chamber. The impurity containing hydride gas is then contacted with a hydrogenated getter metal contained within the gas purification chamber thus removing the impurities. The gas purification chamber is also in fluid communication with a purified gas outlet. The purified gas is then passed through the outlet.

With reference now to Fig. 1 there is shown an apparatus 10 useful in performing the process of the present invention for the removal of impurities from an impurity containing hydride gas. Apparatus 10 comprises an impurity containing gas inlet 12 through which may be passed for example silane gas containing the impurity disiloxane. Inlet 1 is in fluid communication with a gas purification chamber 14 which contains a hydrogenated getter metal 16. The metal of the hydrogenated getter metal is preferably chosen from the group consisting of 70-95% Zr balance Al, 70-95% Zr balance Fe, $Zr_2Ni$, Zr-V-Fe alloys and their alloys with other metals, Zr-V-Mn alloys and their alloys with other metals, Zr-V-Al alloys and their alloys with other metals. Most preferably the alloy is a Zr-V-Fe whose composition in weight percent when plotted on a ternary composition diagram in weight percent Zr, weight percent V and weight percent Fe lies within a polygon having as its corners the points defined by:

a-75% Zr - 20% V - 5% Fe

b-45% Zr- 20% V - 35% Fe

2

c-45% Zr - 50% V - 5% Fe

and even more preferably whose compositions in weight percent when plotted on a ternary composition diagram in weight percent Zr, weight percent V and weight percent Fe lies within a polygon having as its corners the points defined by

(d) 70% Zr - 25% V - 5% Fe

(e) 70% Zr - 24% V - 6% Fe

(f) 66% Zr - 24% V - 10% Fe

(g) 47% Zr - 43% V - 10% Fe

(h) 47% Zr - 45% V - 8% Fe

(i) 50% Zr - 45% V - 5% Fe.

It should be realized that small amounts of other metals can be used without substantially altering its purification characteristics. For instance the iron may be partially replaced by nickel, or the vanadium may be partially replaced with niobium. It may be advantageous to replace some of the zirconium with titanium without substantially altering the main sorption ability of the basic ternary alloy. One or more substitutions may take place at the same time.

The getter metal should be hydrogenated and in the case of Zr-V-Fe alloys one gram of alloy, may absorb a litre of hydrogen at room temperature under a pressure of of up to 24kPa

The hydrogenated getter metal is preferably in the form of loose powder or compressed powder pellets which may contain a binder. The impurity containing hydride gas contacts the hydrogenated getter metal 16 which removes impurities such as disiloxane and then the purified gas passes through a purified gas outlet 18 which is in fluid communication with chamber 14.

EXAMPLE I

This example does not form part of the present invention but was designed to show disadvantages of the prior art.

A non-hydrogenated getter alloy having a nominal composition by weight of 70% Zr-24.6% V-5.4% Fe was activated by heating to 350°C for 4 hours in a flow of argon.

The getter alloy was cooled to room temperature.

Different flow rates of various gases and impurities were allowed to contact the non-hydrogenated getter alloy at different temperatures. The results are given in Table Ia and Ib.

TABLE Ia

| Test | Inlet | | | | Throughput |
|------|-------|-------|--------|-------------------|------------|
|      | Argon | Silane | $H_2O$ | Di-siloxane |            |
| 1    | ≈ 99%  | 7500 ppm | 4.8 ppm | –   | 400 $cm^3min^{-1}$ |
| 2    | ≈ 100% | 1250 ppm | 4.8 ppm | –   | 1600 $cm^3min^{-1}$ |
| 3    | ≈ 100% | 196 ppm  | 5.6 ppm | –   | 1530 $cm^3min^{-1}$ |
| 4    | ≈ 100% | 1250 ppm | –       | –   | 1600 $cm^3min^{-1}$ |
| 5    | ≈ 100% | 1250 ppm | –       | –   | 1600 $cm^3min^{-1}$ |
| 6    | ≈ 99%  | 7500 ppm | –       | –   | 400 $cm^3min^{-1}$ |
| 7    | ≈ 100% | 1250 ppm | –       | –   | 1600 $cm^3min^{-1}$ |
| 8    | ≈ 99%  | 1%       | 5 ppm   | –   | 400 $cm^3min^{-1}$ |
| 9    | ≈ 98%  | 2%       | –       | 1.2 ppm | 100 $cm^3min^{-1}$ |
| 10   | –      | 100%     | –       | 2.5 ppm | 100 $cm^3min^{-1}$ |
| 11   | –      | 100%     | –       | 2.5 ppm | 100 $cm^3min^{-1}$ |

* after 30 minutes flow
** after 145 minutes flow

TABLE Ib

|  | | Outlet | | |
| Test | Temperature | Silane | $H_2O$ | Di-siloxane |
| 1 | 22°C | 7500 | 0.15ppm | - |
| 2 | 22°C | 1250 ppm | 0.2ppm | - |
| 3 | 22°C | 190 ppm | 0.35ppm | - |
| 4 | 50°C | 1250 ppm | - | - |
| 5 | 75°C | 1216 ppm | - | - |
| 6 | 75°C | 7500 ppm | - | - |
| 7 | 100°C | 720 ppm | - | - |
| 8 | 75°C | 1% | 0.1-0.2ppm | - |
| 9 | 22°C | 2% | - | 1.2ppm |
| 10 | 22°C | 100% | - | 0.36ppm* 0.9ppm** |
| 11 | 70°C | 100% | - | substantially as for test N°10 |

\* after 30 minutes flow
\*\* after 145 minutes flow

A comparison of tests 1-3 shows that $H_2O$ is efficiently removed at room temperature (22°C) as well as at 75°C (test 8) to values below those specified for ultrahigh purity silane.

If silane contacts the non-hydrogenated getter alloy between 75 and 100°C then it is decomposed or absorbed (tests 5-7) whereas between room temperature and 75°C silane is not decomposed or sorbed by the alloy (tests 4-6).

The disiloxane is only partially removed over the temperature range of 22-70°C over which the silane process gas is not affected (tests 10-11).

EXAMPLE II

This example was designed to show the advantages of the process of the present invention.

A non-hydrogenated getter alloy having a nominal composition by weight of 70% Zr-24.6% V-5.4% Fe was activated by heating to 350° for 4 hours in a flow of argon. Hydrogen gas was then mixed with the argon and the getter alloy was allowed to slowly cool down to room temperature thus hydrogenating the getter alloy until it had sorbed about 180 litre-torr.g$^{-1}$ of hydrogen.

Silane gas containing a known concentration of disiloxane was then contacted with the hydrogenated getter alloy at different temperatures. The results of the test are shown in Table II.

## TABLE II

| t (min) | T (°C) | $(SiH_3)_2O$ (ppm) Inlet | $(SiH_3)_2O$ (ppm) Outlet |
|---------|--------|------|------|
| 20 | 100 | 2.5 | < 0.1 |
| 40 | 100 | 2.5 | < 0.1 |
| 55 | 100 | 2.5 | < 0.1 |
| 75 | 125 | 2.5 | < 0.1 |
| 100 | 125 | 2.5 | < 0.1 |
| 130 | 50 | 2.5 | < 0.1 |
| 150 | 50 | 2.5 | < 0.1 |
| 170 | 50 | 2.5 | < 0.1 |
| 200 | 22 | 2.5 | < 0.1 |
| 220 | 22 | 2.5 | < 0.1 |

As can be seen from Table II the outlet gas has a disiloxane impurity content of less than 0.1 ppm, less than the sensitivity of the measuring instrument.

The measuring instruments used in all tests were as follows:

Silane:          Gas Chromatography with TCD (Thermal Conductivity Detector)

$H_2O$:          Vibrating quartz hygrometer.

Disiloxane:      Gas Chromatograph with TCD and PTD (Photo ionization Detector).

## Claims

1.  A process for the removal of impurities from an impurity containing hydride gas by contacting said impurity containing hydride gas with a hydrogenated getter metal characterized in that the metal of the hydrogenated getter metal is a Zr-V-Fe alloy.

2.  A process according to claim 1, characterized in that the impurity containing hydride gas is $SiH_4$.

3.  A process according to claim 2, characterized in that the impurity to be removed is disiloxane.

4.  A process according to claim 1 in which the Zr-V-Fe getter alloy has a composition in weight percent when plotted on a ternary composition diagram in weight pecent Zr, weight percent V and weight percent Fe which lies within a polygon having as its corners the points defined by:
    a-75% Zr - 20% V - 5% Fe
    b-45% Zr - 20% V - 35% Fe
    c-45% Zr - 50% V - 5% Fe

5.  A process according to claim 4 in which the Zr-V-Fe getter alloy has a composition in weight percent that, when plotted on a ternary composition diagram in weight percent Zr, weight percent V and weight percent Fe, lies within a polygon having as its corners the points defined by

(d) 70% Zr - 25% V - 5% Fe
(e) 70% Zr - 24% V - 6% Fe
(f) 66% Zr - 24% V - 10% Fe
(g) 47% Zr - 43% V - 10% Fe
(h) 47% Zr - 45% V - 8% Fe
(i) 50% Zr - 45% V - 5% Fe.

6. A process according to claim 2 in which the hydrogenated Zr-V-Fe getter alloy absorbs a litre of hydrogen at room temperature under a pressure of of up to 24kPa

**Patentansprüche**

1. Verfahren zum Entfernen von Verunreinigungen aus einem eine Verunreinigung enthaltenden Hydridgas durch Kontaktieren dieses die Verunreinigung enthaltenden Hydridgases mit einem hydrierten Gettermetall,
   **dadurch gekennzeichnet**, daß das Metall des hydrierten Gettermetalls eine Zr-V-Fe-Legierung ist.

2. Verfahren nach Anspruch 1,
   **dadurch gekennzeichnet**, daß das die Verunreinigung enthaltende Hydridgas SiH$_4$ ist.

3. Verfahren nach Anspruch 2,
   **dadurch gekennzeichnet**, daß die zu entfernende Verunreinigung Disiloxan ist.

4. Verfahren nach Anspruch 1, bei dem die Zr-V-Fe-Getterlegierung eine Zusammensetzung in Gewichts-% hat, die, wenn sie in ein Dreistoffsystem-Diagramm in Gewichts-% Zr, Gewichts-% V und Gewichts-% Fe eingetragen ist, innerhalb eines Polygons mit folgenden Eckpunkten liegt:
   a-75 % Zr - 20 % V - 5 % Fe
   b-45 % Zr - 20 % V - 35 % Fe
   c-45 % Zr - 50 % V - 5 % Fe

5. Verfahren nach Anspruch 4, bei dem die Zr-V-Fe-Getterlegierung eine Zusammensetzung in Gewichts-% hat, die, wenn sie in einem Dreiststoffsystem-Diagramm in Gewichts-% Zr, Gewichts-% V und Gewichts-% Fe aufgetragen ist, innerhalb eines Polygons mit folgenden Eckpunkten liegt:
   (d) 70 % Zr - 25 % V - 5 % Fe
   (e) 70 % Zr - 24 % V - 6 % Fe
   (f) 66 % zr - 24 % V - 10 % Fe
   (g) 47 % Zr - 43 % V - 10 % Fe
   (h) 47 % Zr - 45 % V - 8 % Fe
   (i) 50 % Zr - 45 % V - 5 % Fe

6. Verfahren nach Anspruch 2, bei dem die hydrierte Zr-V-Fe-Getterlegierung einen Liter Wasserstoff bei Raumtemperatur unter einem Druck von bis zu 24 kPa absorbiert.

**Revendications**

1. Un procédé pour l'élimination d'impuretés d'un hydrure gazeux contenant des impuretés par mise en contact dudit hydrure gazeux contenant des impuretés avec un métal sorbant hydrogéné, caractérisé en ce que le métal du métal sorbant hydrogéné est un alliage Zr-V-Fe.

2. Un procédé selon la revendication 1, caractérisé en ce que l'hydrure gazeux contenant des impuretés est SiH$_4$ .

3. Un procédé selon la revendication 2, caractérisé en ce que l'impureté devant être éliminée est le disiloxane.

4. Un procédé selon la revendication 1, dans lequel l'alliage sorbant Zr-V-Fe présente une composition en pourcentage pondéral lorsqu'elle est tracée sur un diagramme de composition ternaire en pourcentage pondéral de Zr, pourcentage pondéral de V et pourcentage pondéral de Fe qui se trouve à l'intérieur

7

d'un polygone ayant, pour ses coins, les points définis par :

    a-75% Zr - 20% V - 5% Fe
    b-45% Zr - 20% V - 35% Fe
    c-45% Zr - 50% V - 5% Fe

5. Un procédé selon la revendication 4, dans lequel l'alliage sorbant Zr-V-Fe présente une composition en pourcentage pondéral qui lorsqu'elle est tracée sur un diagramme de composition ternaire en pourcentage pondéral de Zr, pourcentage pondéral de V et pourcentage pondéral de Fe se trouve à l'intérieur d'un polygone présentant, pour ses coins, les points définis par :

    (d) 70% Zr - 25% V - 5% Fe
    (e) 70% Zr - 24% V - 6% Fe
    (f) 66% Zr - 24% V - 10% Fe
    (g) 47% Zr - 43% V - 10% Fe
    (h) 47% Zr - 45% V - 8% Fe
    (i) 50% Zr - 45% V - 5% Fe

6. Un procédé selon la revendication 2, dans lequel l'alliage sorbant Zr-V-Fe hydrogéné absorbe un litre d'hydrogène à température ambiante sous une pression allant jusqu'à 24kPa.

FIG. 1